(19) Europäisches Patentamt
European Patent Office
Office européen des brevets

(11) **EP 3 261 222 A2**

(12) **EUROPÄISCHE PATENTANMELDUNG**

(43) Veröffentlichungstag:
**27.12.2017 Patentblatt 2017/52**

(51) Int Cl.:
***H02K 1/27*** *(2006.01)*

(21) Anmeldenummer: **17175713.1**

(22) Anmeldetag: **13.06.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **23.06.2016 DE 102016211257**

(71) Anmelder: **Robert Bosch GmbH**
**70442 Stuttgart (DE)**

(72) Erfinder:
• **Derhardt, Steffen**
  **70839 Gerlingen (DE)**
• **Paweletz, Anton**
  **70736 Fellbach (DE)**

(54) **ROTORSYSTEM FÜR EINE ELEKTRISCHE MASCHINE, ELEKTRISCHE MASCHINE MIT DEM ROTORSYSTEM UND HERSTELLUNGSVERFAHREN FÜR DAS ROTORSYSTEM**

(57) Die Erfindung betrifft ein Rotorsystem für eine elektrische Maschine (1) aufweisend: eine zweigeteilte Welle (6) mit einem ersten Wellenteil (12) und einem zweiten Wellenteil (13); eine Verbindungsstange (20), welche durch das eine Wellenteile (12) hindurchgeführt und mit dem anderen Wellenteil (13) fest verbunden ist, wobei zwischen beiden Wellenteilen (12, 13) ein Rotor (4) mit wenigstens einem Magnetelement (5) angeordnet ist.

Fig. 1

EP 3 261 222 A2

**Beschreibung**

Die Erfindung betrifft ein Rotorsystem für eine elektrische Maschine, sowie eine elektrische Maschine mit einem solchen Rotorsystem und ein Herstellungsverfahren zum Herstellen des Rotorsystems der elektrischen Maschine.

Stand der Technik

Rotoren von Hochgeschwindigkeitsmaschinen beinhalten in der Regel hoch energetische Seltene-Erden Permanentmagnete. Solche Hochgeschwindigkeitsmaschinen werden typischerweise in einem Drehzahlbereich von mehr als hunderttausend Umdrehungen pro Minute angewendet.

Aus der US 4,433 261 A ist eine Synchronmaschine vom Permanentmagnettyp mit einem Rotor bekannt. Auf einer Rotorwelle sind dabei Seitenplatten aus einem nichtmagnetischen Material, wie Edelstahl, in einem derartigen Abstand durch Schweißen befestigt, dass säulenförmige Permanentmagnete derart dazwischen eingesetzt werden können, dass eine Verschiebung der Permanentmagnete in Umfangsrichtung verhindert wird. Die Magnete werden mit der Oberfläche der Welle und den Seitenplatten verklebt. Des Weiteren wird ein Harz in den Zwischenraum zwischen den Magneten eingespritzt. Anschließend wird der Außenumfang der so montierten Magnete mit Glasfasern oder Kohlefasern umwickelt.

Offenbarung der Erfindung

Die Erfindung offenbart ein Rotorsystem für eine elektrische Maschine mit den Merkmalen des Patentanspruchs 1, eine elektrische Maschine mit den Merkmalen des Patentanspruchs 14 und ein Verfahren zur Herstellung des Rotorsystems mit den Merkmalen des Patentanspruchs 15.

Demgemäß ist ein Rotorsystem für eine elektrische Maschine vorgesehen aufweisend: eine zweiteilige Welle mit einem ersten Wellenteil und einem zweiten Wellenteil;

eine Verbindungsstange, welche durch das eine Wellenteile hindurchgeführt, insbesondere vollständig hindurchgeführt und mit dem anderen Wellenteil fest verbunden ist, wobei zwischen beiden Wellenteilen ein Rotor mit wenigstens einem Magnetelement angeordnet ist.

Des Weiteren ist eine elektrische Maschine mit einem solchen Rotorsystem vorgesehen, wobei die elektrische Maschine insbesondere eine Hochgeschwindigkeitsmaschine, vorzugsweise eine Turbine und/oder ein Kompressoren ist.

Außerdem ist ein Verfahren zur Herstellung eines Rotorsystems für eine elektrische Maschine vorgesehen, wobei das Verfahren die Schritte aufweist:

Bereitstellen einer Verbindungsstange;
Bereitstellen einer Hülse mit einer Magnetelement-Aufnahme;
Bereitstellen wenigstens eines Magnetelements;
Bereitstellen einer zweiteiligen Welle mit einem ersten Wellenteil und einem zweiten Wellenteil, wobei das eine Wellenteil eine Durchführung zum Hindurchführen der Verbindungsstange aufweist;
Anordnen des wenigstens einen Magnetelements in der Magnetelement-Aufnahme und Verbinden der Hülse mit den beiden gegenüberliegenden Enden der Wellenteile, wobei die Verbindungsstange durch die Durchführung des einen Wellenteils hindurchgeführt und in an dem anderen Wellenteil befestigt ist.

Vorteile der Erfindung

Die vorliegende Erfindung schafft ein Rotorsystem, mit einer verbesserten Verbindung der beiden Wellenteile mittels einer Verbindungsstange. Die Verbindungsstange wird dabei nicht durch beide Wellenteile vollständig hindurchgeführt sondern stattdessen nur durch ein Wellenteil hindurchgeführt und an dem anderen Wellenteil befestigt.

Bevorzugte Weiterbildungen sind Gegenstand der Unteransprüche.

Die Verbindungsstange ist in einer erfindungsgemäßen Ausführungsform in einer Verbindungsstangenaufnahme des Wellenteils aufgenommen, wobei die Verbindungsstange mit der Verbindungsstangenaufnahme kraftschlüssige und/oder formschlüssige verbunden ist, und/oder wobei die Verbindungsstange insbesondere lösbar in der Verbindungsstangenaufnahme befestigt ist, beispielsweise durch Verstiften, Verschrauben, und/oder Verbolzen, und/oder wobei die Verbindungsstange unlösbar in der Verbindungsstangenaufnahme befestigt ist, beispielsweise durch Verkleben, Verschweißen und/oder Verlöten. Auf diese Weise kann eine feste Verbindung zwischen der Verbindungsstange und dem Wellenteil erzielt werden.

In einer anderen erfindungsgemäßen Ausführrungsform können die Verbindungsstange und das Wellenteil auch einstückig hergestellt werden, beispielsweise aus Metall, darunter auch Metalllegierungen, sowie Kunststoff und/oder einem Faserverbundmaterial, insbesondere einem Kohlefaserverbundmaterial. Eine einstückige Herstellung hat den Vorteil, dass keine zusätzlichen Befestigungsmittel zum Befestigen der Verbindungsstange an dem Wellenteil vorgesehen werden müssen.

In einer weiteren erfindungsgemäßen Ausführrungsform ist zumindest die Verbindungsstange aus einem Material mit einer möglichst großen mechanischen Stabilität und einem möglichst niedrigen thermischen Ausdehnungskoeffizienten hergestellt, z.B. aus einem Faserverbundmaterial wie einem Kohlefaserverbundmaterial.

Eine Hülse zum Verbinden der beiden inneren Enden der Wellenteile ist in einer anderen erfindungsgemäßen Ausführungsform vorgesehen. Dabei kann die Hülse beispielsweise durch Verpressen oder Aufschrumpfen mit wenigstens einem der Wellenteile bzw. dessen Endabschnitt verbunden werden. Das Verpressen oder Aufschrumpfen ist ein einfaches und kostengünstiges Verfahren zum Verbinden der Hülse mit einem jeweiligen Wellenteil. Die Erfindung ist aber auch Verpressen und Aufschrumpfen nicht beschränkt. Es kann jedes andere Befestigungsverfahren und/oder Befestigungsmittel vorgesehen werden, welches zum Verbinden der Hülse mit dem zugeordneten Wellenteil geeignet ist.

Die Hülse weist in einem erfindungsgemäßen Ausführungsbeispiel eine Magnetelement-Aufnahme zum Aufnehmen des wenigstens einen Magnetelements auf und bildet mit dem wenigstens einen Magnetelement den Rotor. Die Verbindungsstange ist dabei entlang einer Durchführung des wenigstens einen Magnetelements hindurchgeführt, wobei die Durchführung des Magnetelements beispielsweise eine Durchgangsöffnung oder eine Innenseite eines Magnetelementsegments ist, welche eine Durchführung für die Verbindungsstange durch die Hülse bildet. Das Magnetelementsegment ist dabei um die Verbindungsstange angeordnet. Auf diese Weise können durch eine segmentierte Bauweise der Magnetelementanordnung auch Magnetelemente in eine Nut als Magnetelement-Aufnahme eingesetzt und mit ihrer Innenseite eine Durchführung für die Verbindungsstange anschließend bilden.

Der Innenumfang der Hülse bildet in einer weiteren erfindungsgemäßen Ausführungsform die Magnetelement-Aufnahme und weist dabei einen konstanten Innendurchmesser auf. Ebenso kann die Hülse an ihrem Innenumfang eine umlaufende Nut als Magnetelement-Aufnahme aufweisen, in welche ein Magnetelementsegment, z.B. ein Magnetelementstab, und gegebenenfalls eine segmentierte Trägerplatte einsetzbar sind. Des Weiteren kann die Hülse in einer anderen erfindungsgemäßen Ausführungsform an ihrem Innenumfang auch abgestuft oder mit einer Stufe ausgebildet sein, welche als Anschlag für das wenigstens eine Magnetelement dient, wenn dieses in die Hülse eingeschoben. Der wesentliche Vorteil diese Lösung liegt in der Möglichkeit die Wellensteifigkeit einzustellen und damit die Konstruktion an die Schwingungseigenschaften des gesamten Systems anzupassen. Die Einstellung kann durch Verspannung am oder mittels des Spannelements 19 erfolgen und kann auch nachträglich durch Versuche am Prototypen optimal gewählt werden.

In einer erfindungsgemäßen Ausführungsform ist in der Magnetelement-Aufnahme an wenigstens einem Ende des wenigstens einen Magnetelements eine zusätzliche Trägerplatte anordenbar. Bei einer Nut als Magnetelement-Aufnahme ist die Trägerplatte dabei zusätzlich ebenfalls segmentiert ausgebildet, um in die Nut eingesetzt werden zu können.

Das wenigstens eine Magnetelement kann als ein Magnetsegment z.B. ein Magnetstab oder eine Magnetstange usw. sein. In einer weiteren erfindungsgemäßen Ausführungsform kann das Magnetelement auch eine Magnetscheibe oder eine Magnethülse sein, welche bei Bedarf in axialer Richtung hintereinander angeordnet werden können. Das wenigstens eine Magnetelement kann unabhängig davon, ob es zusätzlich segmentiert ausgebildet ist oder nicht radial oder diametral magnetisiert ausgebildet sein.

In einer anderen erfindungsgemäßen Ausführungsform kann wenigstens ein Ende des wenigstens einen Magnetelements als flaches oder ebenes Ende oder als ein nach außen hervortretendes oder hervorstehendes spitzes oder stumpfes Ende ausgebildet sein. Im Falle von mehreren Magnetelementen bilden die Enden der Magnetelemente z.B. ein gemeinsames flaches Ende oder ein gemeinsames nach außen hervorstehendes spitzes oder stumpfes Ende, insbesondere konisches Ende, wie ein kegelförmiges oder kegelstumpfförmiges Ende.

An der Innenumfangsfläche der Magnetelement-Aufnahme und/oder an der Außenumfangsfläche des wenigstens einen Magnetelements kann in einer weiteren Ausführungsform der Erfindung ein zusätzliches elastisches Ausgleichselement vorgesehen sein. Zusätzlich oder alternativ kann auch zwischen dem Wellenteil und dem gegenüberliegenden Ende des wenigstens einen Magnetelements ein derartiges elastisches Ausgleichselement vorgesehen sein. Das elastische Ausgleichselement ist hierbei beispielsweise eine Ausgleichsschicht, welche z.B. aus einem Harz besteht, welches nach dem Aushärten zumindest teilweise elastisch ist. Das Ausgleichselement kann zum einen Fertigungstoleranzen ausgleichen und zum anderen dämpfend wirken.

Zwischen wenigstens einem Ende des wenigstens einen Magnetelementes und dem dazu gegenüberliegenden Wellenteil ist in einer anderen Ausführungsform der Erfindung die Trägerplatte vorgesehen, wobei die Trägerplatte eine axiale Aufnahme für das wenigstens eine Magnetelement bildet. Dabei kann optional ein zusätzliches elastisches Ausgleichselement zwischen dem Ende des wenigstens einen Magnetelements und der Trägerplatte und/oder zwischen der Trägerplatte und dem gegenüberliegenden Wellenteil vorgesehen werden. Auf diese Weise kann auch eine Dämpfung in axialer Richtung sowie ein Toleranzausgleich bereitgestellt werden.

In einer weiteren erfindungsgemäßen Ausführungsform ist wenigstens eine Trägerplatte aus einem nicht magnetischen Material oder einer nicht magnetischen Materialkombination hergestellt. Dadurch können störende magnetische Einflüsse auf die umliegenden Teile verhindert werden.

Kurze Beschreibung der Zeichnungen

Weitere Merkmale und Vorteile der vorliegenden Erfindung werden nachfolgend anhand der Figuren erläutert. Es zeigen:

Fig. 1    eine schematische Schnittansicht einer elektrischen Maschine mit einem Rotorsystem gemäß einer ersten erfindungsgemäßen Ausführungsform;

Fig. 2    eine schematische Schnittansicht einer elektrischen Maschine mit einem Rotorsystem gemäß einer zweiten erfindungsgemäßen Ausführungsform;

Fig. 3a    eine schematische Seitenansicht einer Magnetelementhülse;

Fig. 3b    eine Schnittansicht der Magnetelementhülse gemäß Fig. 3a;

Fig. 4a    eine schematische Seitenansicht einer segmentierten Magnetelement-Anordnung aus z.B. zwei Magnetelementen;

Fig. 4b    eine Schnittansicht der Magnetelemente gemäß Fig. 4a;

Fig. 5    ein Flussdiagramm zur Herstellung des Rotorsystems der elektrischen Maschine gemäß der Fig. 1, 2, 3a, 3b, 4a und 4b.

Ausführungsformen der Erfindung

Die vorliegende Erfindung betrifft die Struktur, die Konstruktion und ein Herstellungsverfahren eines Rotorsystems einer elektrischen Maschine, insbesondere Hochgeschwindigkeitsmaschine, die in einem variablen Betriebszyklus betrieben werden und hohen Temperaturschwankungen ausgesetzt sein kann. Die Rotoren solcher elektrischer Maschinen bestehen in der Regel aus hoch energetischen Permanentmagneten aus seltenen Erden.

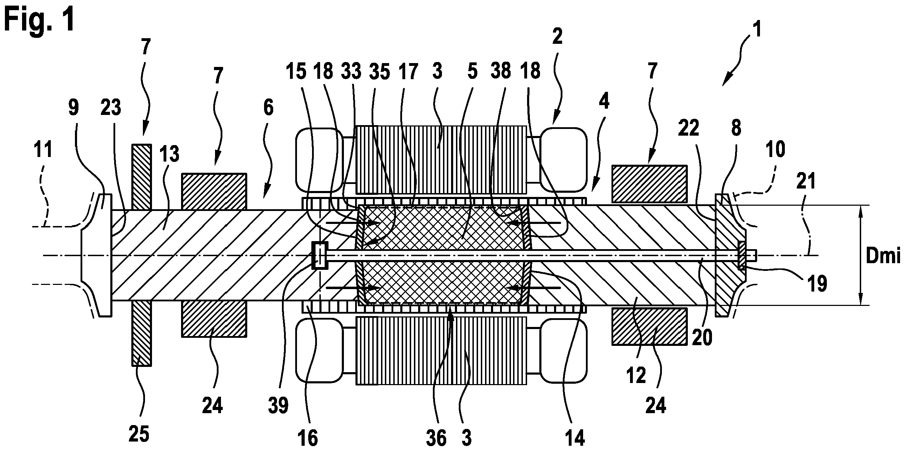

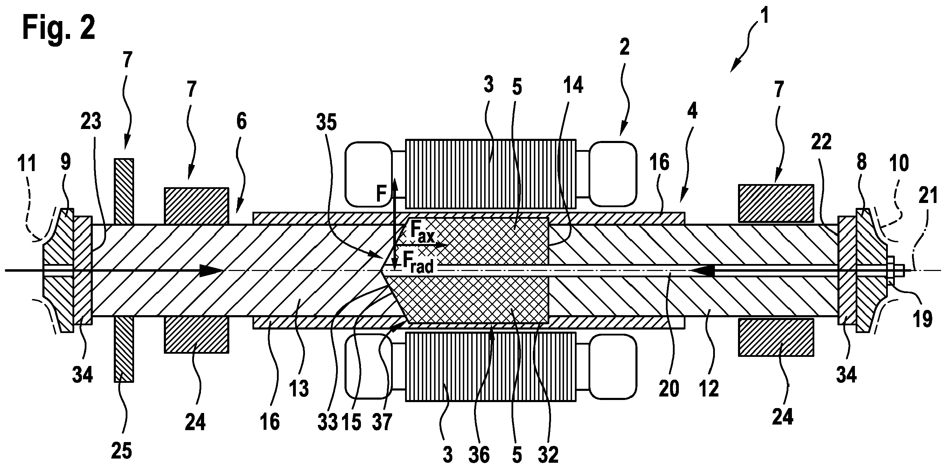

In den Fig. 1 und 2 ist jeweils eine Grundanordnung einer elektrischen Maschine 1, z.B. einer Hochgeschwindigkeitsmaschine, mit einem Rotorsystem gemäß der Erfindung gezeigt, welches im Nachfolgenden noch erläutert wird.

Die Fig. 1 und 2 zeigen zunächst die Grundanordnung von elektromagnetischen, aktiven Komponenten der beispielhaften elektrischen Maschine 1, wie dem Stator 2 mit Wicklungen 3, dem Rotor 4 mit Magnetelementen 5, die Welle 6 und die Lagerelemente 7 des Rotors 4. Die Darstellung in den Fig. 1 und 2 ist dabei rein schematisch, stark vereinfacht und nicht maßstäblich.

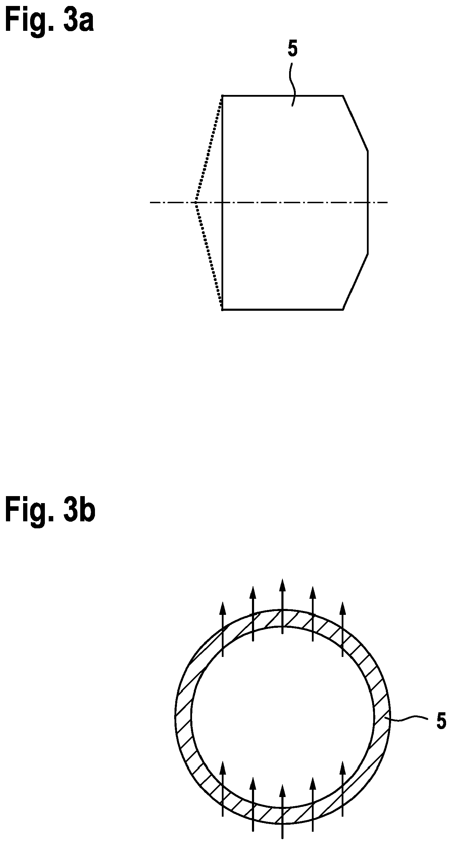

Die Maschine 1 mit dem erfindungsgemäßen Rotorsystem bildet in dem in den Fig. 1 und 2 gezeigten Ausführungsbeispielen z.B. den Antrieb eines zweistufigen Kompressors oder Verdichters. Das erfindungsgemäße Rotorsystem mit seinem Rotor 4 ist aber weder auf Hochgeschwindigkeitsmaschinen oder Kompressoren bzw. Verdichter noch auf die speziellen Ausführungsformen der elektrischen Maschine in den Fig. 1 und 2 sowie nachfolgenden Fig. 3a, 3b, 4a, 4b und 5 beschränkt, sondern kann bei jeder elektrischen Maschine eingesetzt werden, welche geeignet ist mit dem erfindungsgemäßen Rotorsystem mit seinem Rotor 4 ausgerüstet zu werden. Das erfindungsgemäße Rotorsystem weist den Rotor 4 und die zweigeteilte Welle 6 auf.

Die Laufräder 8 und 9 von beiden Verdichterstufen der elektrischen Maschine 1 sind auf gegenüberliegenden Seiten des Motors angeordnet. Ihre Gegenstücke, die Gehäuse 10, 11 oder Voluten sind in den Fig. 1 und 2 lediglich mit einer gestrichelten Linie angedeutet.

Wie in Fig. 1 und 2 gezeigt ist, weist das erfindungsgemäße Rotorsystem den Rotor 4 und die zweiteilige Welle 6 oder zweiteilige Motorwelle mit einem ersten Wellenteil 12 und einem zweiten Wellenteil 13 auf. Die beiden ersten und zweiten Wellenteile 12 und 13 sind auf einer gemeinsamen Verbindungsstange 20 angeordnet, deren Längsachse gleichzeitig auch die Rotationsachse 21 der Welle 6 und ihrer Wellenteile 12, 13 und des dazwischen angeordneten Rotors 4 bildet.

Bei dem erfindungsgemäßen Rotorsystem ist die Verbindungsstange 20 dabei durch ein Wellenteil, hier das erste Wellenteil 12 in den Ausführungsbeispielen in Fig. 1 und 2, vollständig hindurchgeführt und in das andere Wellenteil, hier das zweite Wellenteil 13, lediglich eingeführt und an diesem befestigt oder einstückig mit diesem ausgebildet, wie im Folgenden noch erläutert wird.

Beide Wellenteile 12, 13 werden in den in Fig. 1 und 2 gezeigten Ausführungsbeispielen über eine separate Hülse 16, welche eine Magnetelement-Aufnahme 36 aufweist, miteinander verbunden. Beispielsweise wird die Hülse 16 auf die inneren Enden der beiden Wellenteile 12, 13 aufgeschrumpft oder mit diesen verpresst usw., wobei in der Magnetelement-Aufnahme 36 der Hülse 16 wenigstens ein Magnetelement 5 angeordnet ist.

Statt einer separaten Hülse 16 kann auch eines der Wellenteile 12, 13 mit einer derartigen Magnetelement-Aufnahme (nicht dargestellt) ausgebildet sein. Das Wellenteil kann dabei mit seiner Magnetelement-Aufnahme und wenigstens einem darin angeordneten Magnetelement sowie gegebenenfalls wenigstens einer zusätzlichen Trägerplatte verbunden werden. Beispielsweise können die beiden Wellenteile zusammensteckbar ausgebildet sein und wie der Rotor 4 mit den beiden Wellenteilen 12, 13 in den Ausführungsbeispielen in Fig. 1 und 2 in axialer Richtung z.B. durch ein Spannelement 19 verspannt werden.

An dem jeweiligen äußeren Ende 22, 23 des ersten und zweiten Wellenteils 12 bzw. 13 ist in dem in den Fig. 1 und 2 gezeigten Ausführungsbeispielen jeweils das Laufrad oder sog. Impeller 8 bzw. 9 angeordnet.

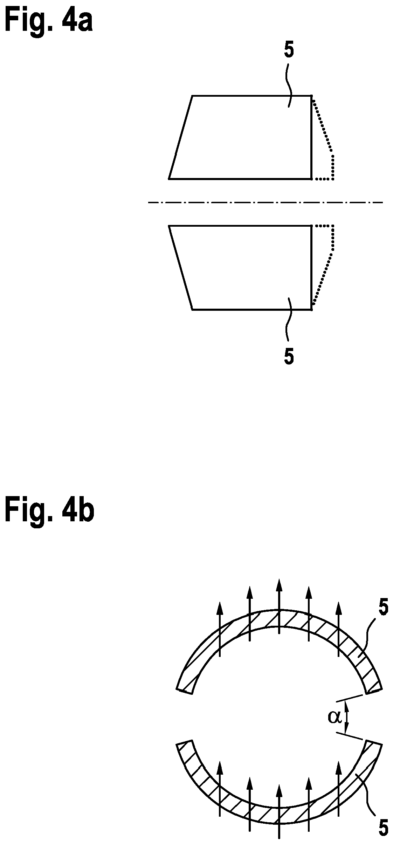

Die beiden Ausführungsbeispiele in den Fig. 1 und 2 weisen im Wesentlichen denselben Aufbau auf und unterscheiden sich dadurch, dass bei dem Ausführungsbeispiel in Fig. 2 ein Ende des jeweiligen Magnetelements 5 als ein nach außen zeigendes oder hervorstehendes, z.B. spitzes, Ende ausgebildet ist, während das andere Ende flach oder eben ausgebildet ist. In dem Ausführungsbeispiel in Fig. 1 sind dagegen beide Enden des jeweiligen Magnetelements 5 z.B. als nach außen zeigende oder hervorstehende spitze Enden ausgebildet. Das jeweils nach außen zeigende oder hervorstehende Ende eines Magnetelements 5 kann sowohl als ein nach außen zeigendes spitzes Ende als auch als ein nach außen zeigendes stumpfes Ende ausgebildet sein, wie in nachfolgenden Fig. 3a, 3b, 4a und 4b beispielhaft gezeigt ist. Ebenso können beide Enden der jeweiligen Magnetelemente 5 in den Ausführungsformen auch flach oder eben ausgebildet sein, wie das eine Ende des Magnetelements 5 in Fig. 2.

Des Weiteren weist das Ausführungsbeispiel in Fig. 1 an beiden Enden der Magnetelemente 5 jeweils eine optionale zusätzliche Trägerplatte 18 auf, während diese in dem Ausführungsbeispiel in Fig. 2 z.B. nicht enthalten sind.

Wie nachfolgend noch beschrieben wird, sind die inneren Enden der Wellenteile 12, 13 in den Ausführungsbeispielen in den Fig. 1 und 2 entsprechend an die Form der Enden der Magnetelemente 5, oder sofern vorhanden einer jeweils dazwischen angeordneten im Folgenden noch näher beschriebenen Trägerplatte 18, angepasst.

Bei dem Ausführungsbeispiel in Fig. 2 sind im Gegensatz zu dem Ausführungsbeispiel in Fig. 1 außerdem zusätzliche Zwischenscheiben 34 zwischen dem äußeren Ende 22, 23 des jeweiligen Wellenteils 12, 13 und seinem zugeordneten Laufrad 8, 9 vorgesehen.

In dem Ausführungsbeispiel in Fig. 1 weist die Hülse 16 eine zylindrische Vertiefung auf, in welcher das wenigstens eine Magnetelement 5, beispielsweise eine Magnetelementhülse oder-scheibe von einer Einführungsseite als Ganzes einschiebbar ist, während in dem Ausführungsbeispiel in Fig. 2 die Hülse 16 an ihrem Innenumfang eine umlaufende Nut 32 als Magnetelement-Aufnahme 36 aufweist, welche eine segmentierte Bauweise der Magnetelement-Anordnung und gegebenenfalls einer einzusetzenden Trägerplatte 18 erfordert.

Der Boden 33 der zylindrischen Vertiefung der Hülse 16 in Fig. 1 bildet eine Stufe oder Abstufung 37, welche als Anschlag für das jeweiligen Magnetelement 5 in der Magnetelement-Aufnahme der Hülse 16 dient, die durch den Innenumfang der Hülse 16 gebildet wird. Dabei ist in dem Ausführungsbeispiel in Fig. 1 im Gegenteil zu nachfolgender Fig. 2 keine segmentierte Ausführung der Magnetelement-Anordnung oder der optionalen Trägerplatten 18 erforderlich, so dass wenigstens ein hülsenförmiges oder scheibenförmiges Magnetelement 5, wie in Fig. 1 und in nachfolgenden Fig. 3a und 3b gezeigt, eingeführt werden kann. Ebenso können einstückige oder nicht-segmentierte Trägerplatten 18 eingeführt werden.

In dem Ausführungsbeispiel in Fig. 1 ist das Magnetelement 5 mit zwei nach außen zeigenden oder hervortretenden spitzen oder alternativ (nicht dargestellten) stumpfen Enden ausgebildet. Das nach außen zeigende oder hervortretende spitze Ende des Magnetelements 5 in Fig. 1 ist z.B. konisch ausgebildet und mit einer optionalen zusätzlich abgeschrägten Außenkante 38 zum Umgreifen durch eine gegebenenfalls vorhandene Trägerplatte 18, wie in Fig. 1, oder eine Aufnahme des Wellenteils 12, 13, wenn keine zusätzliche Trägerplatte vorhanden ist, versehen.

In dem Ausführungsbeispiel in Fig. 1 ist an beiden Enden des Magnetelements 5 jeweils eine optionale Trägerplatte 18 eingesetzt. Die Trägerplatte 18 weist als Aufnahme 35 dabei auf der Seite des Magnetelements 5 eine entsprechende Vertiefung auf und weist dabei außerdem einen Abschnitt zum Umgreifen der abgeschrägten Außenkante 38 des Endes des Magnetelements 5 auf. Die Trägerplatte 18 ist des Weiteren auf der Seite des jeweiligen Wellenteils 12, 13 korrespondierend zu dem Wellenteil 12, 13 ausgebildet. Die Wellenteile 12, 13 sind jeweils mit einer Vertiefung, z.B. einer konischen Vertiefung, ausgebildet entsprechend der konischen Form der zusätzlichen Trägerplatte 18 auf der dem Wellenteil 12, 13 zugewandten Seite. Falls keine Trägerplatte 18 vorgesehen ist, können die Wellenteile 12, 13 mit einer Aufnahme in Form einer Vertiefung ausgebildet sein, die zu dem nach außen zeigenden oder hervortretenden spitzen oder stumpfen Ende des Magnetelements 5 korrespondiert, wie in dem Ausführungsbeispiel in Fig. 2 gezeigt ist. Die Aufnahme des Wellenteils 12, 13 kann dabei des Weiteren mit einem Abschnitt zum Umgreifen der abgeschrägten Außenkante 38 des Endes des Magnetelements 5 versehen sein zur Aufnahme des Endes des Magnetelements 5 bzw. des gemeinsamen Endes der Magnetelemente 5 in dem Ausführungsbeispiel in Fig. 2.

Der Boden 33 der Vertiefung der Hülse 16 kann senkrecht oder gerade ausgebildet sein oder wie in dem Ausführungsbeispiel in Fig. 1 angedeutet ist, gemäß der Schräge der Trägerplatte 18 oder falls diese nicht vorhanden ist gemäß der Schräge 38 des Endes des Magnetelements 5 verlaufend ausgebildet sein.

In Fig. 1 kann wahlweise zusätzlich ein nicht dargestelltes elastisches Ausgleichselement zwischen der jeweiligen Trägerplatte 18 und dem zugeordneten Wellenteil 12 bzw. 13, sowie zwischen der jeweiligen Trägerplatte 18 und dem Magnetelement 5 vorgesehen sein. Ebenso kann zwischen der Innenseite oder dem Innenumfang der Magnetelement-Aufnahme bzw. der Vertiefung der Hülse 16 und der Außenseite oder dem Außenumfang des Magnetelements 5 und gegebenenfalls der Außenseite oder dem Außenumfang der jeweiligen Trägerplatte 18 ein elastisches Ausgleichselement 17 vorgesehen werden, wie in Fig. 1 mit einer gestrichelten Linie angedeutet ist.

Bei dem in Fig. 1 und Fig. 2 jeweils gezeigten erfindungsgemäßen Ausführungsbeispiel ist die Verbindungsstange 20, wie zuvor ausgeführt, nicht durch die gesamte Welle 6 und deren beide ersten und zweiten Wellenteile 12 und 13 hindurchgeführt. Stattdessen erstreckt sich die Verbindungsstange 20 nur durch eines der Wellenteile, z.B. das erste Wellenteil 12 in den Fig. 1 und 2, vollständig hindurch während ein Ende der Verbindungsstange 20 in dem anderen Wellenteil, z.B. dem zweiten Wellenteil 13 in Fig. 1 und 2, aufgenommen und befestigt ist.

Die Verbindungsstange 20 ist dabei derart an dem Wellenteil 13 befestigt, dass die Verbindungsstange 20 sich zusammen mit dem Wellenteil 13 dreht.

Dabei kann die Verbindungsstange 20 in einem Ausführungsbeispiel, wie in Fig. 1 gezeigt, beispielsweise kraft- und/oder formschlüssig mit dem Wellenteil 13 fest verbunden werden. Ebenso kann die Verbindungsstange 20 in Fig. 2 auch einteilig mit dem Wellenteil 13 ausgebildet und durch das andere Wellenteil 12 vollständig hindurchgeführt werden.

Beispielsweise kann die Verbindungsstange 20 als separates Bauteil in Fig. 1 durch Verpressen, Verstiften, Verschrauben, Verbolzen und/oder Verkleben an dem zweiten Wellenteil 13 befestigt werden. Hierzu sind wenigstens ein Stift 39, eine Schraube und/oder ein Bolzen vorgesehen, mit welchem die Verbindungsstange 20 an dem Wellenteil 13 oder in einer Vertiefung, z.B. einer Aufnahmebohrung, des Wellenteils befestigt wird. Der Stift oder Bolzen wird beispielsweise durch eine in radialer Richtung verlaufende Bohrung des Wellenteils 13 in eine dazu koaxial verlaufende Bohrung der Verbindungsstange 20 im Inneren der Welle 13 ein- oder hindurchgeführt. Dadurch wird die Verbindungsstange 20 in dem Wellenteil 13 befestigt, so dass die Verbindungsstange 20 nicht ungewollt aus dem Wellenteil 13 wieder herausgezogen werden kann. Des Weiteren ist die Verbindungsstange 20 gegen eine Verdrehen gesichert und dreht sich mit dem Wellenteil 13 mit aber nicht ungewollt relativ zu dem Wellenteil 13. Gleiches gilt, wenn statt eines Stifts 39 oder Bolzens eine Schraube verwendet wird. Diese kann durch eine in radialer Richtung verlaufende Bohrung in eine dazu koaxial verlaufende Gewindebohrung der Verbindungsstange eingeschraubt werden. Ebenso kann die Schraube auch durch die Bohrung in dem Wellenteil und eine dazu koaxial verlaufende Bohrung in der Verbindungsstange hindurchgeführt und eine darauffolgende in dem Wellenteil 13 ebenfalls dazu koaxial verlaufende Gewindebohrung eingeschraubt werden.

Als Klebstoff zum Befestigen der Verbindungsstange 20 in der Verbindungsstangen-Aufnahme oder Vertiefung wird im Falle von Verkleben ein Klebstoff gewählt, welcher für die Betriebstemperaturen der elektrischen Maschine 1 und ihres Rotorsystems geeignet ist und insbesondere hierbei ausreichend temperaturbeständig ist.

Bei einer formschlüssigen Verbindung kann die Verbindungsstange 20 in Fig. 1 z.B. einen zylindrischen Endabschnitt aufweisen, welcher mit einer dazu korrespondierenden zylindrischen Bohrung als Verbindungsstangen-Aufnahme des zweiten Wellenteils 13 eine Presspassung bildet.

Ebenso ist es denkbar, dass die Verbindungsstrange 20 in Fig. 1 beispielsweise ein Ende mit einem eckigen, runden und/oder ovalen Querschnitt aufweist, der formschlüssig in einer entsprechenden Vertiefung oder Verbindungsstangen-Aufnahme des zweiten Wellenteils 13 mit einem dazu korrespondierenden eckigen, runden und/oder ovalen Querschnitt aufgenommen ist.

Die Erfindung ist aber auf diese Form der Befestigung, wie in den Ausführungsbeispielen in Fig. 1 und 2 angedeutet, nicht beschränkt. Es kann jede Form der Befestigung oder Kombination von Befestigungen vorgesehen werden, die geeignet ist die Verbindungsstange 20 an dem Wellenteil 13 zu befestigen.

Die Verbindungsstange 20 ist beispielsweise aus einem Material mit einer guten oder möglichst großen mechanischen Stabilität und Festigkeit und weist vorzugsweise einen möglichst niedrigen thermischen Ausdehnungskoeffizienten auf. Die Verbindungsstange 20 kann beispielsweise aus einem Kohlfasermaterial oder einem anderen geeigneten Faserverbundwerkstoff hergestellt sein oder diesen zumindest aufweisen. Die Erfindung ist aber nicht auf einen Faserverbundwerkstoff oder Kohlefasermaterial für die Herstellung der Verbindungstange 20 beschränkt. Es kann jedes andere Material oder Materialkombination für die Verbindungsstange 20 eingesetzt werden, einschließlich ein geeignetes Metall oder eine geeignete Metalllegierung, welche sich bei Wärme möglichst wenig ausdehnt und eine möglichst große mechanische Festigkeit und Stabilität aufweist.

Im Falle einer Verbindungsstange 20 aus Metall oder einer Metalllegierung kann in Ausführungsformen der Erfindung die Verbindungsstange 20 auch einteilig mit dem zweiten Wellenteil 13 ausgebildet sein, wie in Fig. 2 angedeutet ist, oder an dem Wellenteil 13 durch Schweißen oder Löten befestigt sein. Zumindest das zweite Wellenteil 13 der zweigeteilten Welle 6 ist dabei dem entsprechend ebenfalls aus Metall oder einer Metalllegierung. Im Fall von einem Faserverbundwerkstoff der Verbindungsstange 20 ist es auch denkbar diese einstückig zusammen mit dem zweiten Wellenteil aus einem Faserverbundwerkstoff, z.B. Kohlfasermaterial usw. auszubilden.

Zum axialen Verspannen der beiden Wellenteile 12, 13 und des dazwischen angeordneten wenigstens einen Magnetelements 5, sowie der Trägerplatte oder Trägerplatten 18 sofern vorhanden, ist ein Spannelement 19 in den Ausführungsbeispielen in Fig. 1 und 2 vorgesehen. Das Spannelement 19 ist beispielsweise außen an dem ersten Laufrad 8 vorgesehen, beispielsweise in einer Vertiefung des Laufrads in Fig. 1. Als Spannelement 19 kann beispielsweise eine Spannscheibe oder jedes andere geeignete Spannelement vorgesehen werden.

Die Kräfte, die durch die axiale Verspannung erzeugt werden, sind in den Fig. 1 und 2 durch Pfeile angedeutet. Die Befestigung des zweiten Laufrads 9 ist in den Fig. 1 und 2 aus Gründen der Übersichtlichkeit nicht dargestellt. Der zusätzliche Nutzen des Spannelementes 19 ist, dass es durch seine Verstellung möglich ist die Steifigkeit des gesamten Rotors (rotierendes System) zu verändern und einzustellen. Weiterhin ist es möglich, z.B. bei kleinen Stückzahlen und sensiblen Applikationen, die Schwingungscharakteristik, individuell beispielsweise passend zur Ausführung und/oder Toleranzen usw. der Einzelexemplare, das Schwingungsverhalten des Antriebes zu optimieren.

In dem Ausführungsbeispiel in Fig. 2 ist zusätzlich die Spannkräfte-Verteilung an dem durch die außen hervortretenden spitzen Enden der Magnetelemente 5 geformten gemeinsamen konischen oder kegelförmigen Ende gezeigt.

Wie in Fig. 2 dargestellt ist, wirkt die Fliehkraft F der Magnetelemente 5 in radialer Richtung nach außen auf die Hülse 16. Durch die spezielle Kopplung von konvexem, konischem oder spitz nach außen zulaufende Ende des Magnetelements 5 und dazu korrespondierendem konkavem, umgekehrt konischem oder nach innen spitz zulaufendem Ende des gegenüberliegenden Wellenteils 12, 13 bzw. gegebenenfalls dazwischen geschalteter Trägerplatte 18, wie in Fig. 1, kann eine Kraftkomponente in axialer Richtung $F_{ax}$ und eine Kraftkomponente $F_{rad}$ in radialer Richtung entgegen der Fliehkraft erzeugt werden. Dadurch können im Betrieb auftretende Fliehkräfte teilweise kompensiert werden bzw. diesen Fliehkräften entgegengewirkt werden.

Als wenigstens ein Magnetelement 5 kann in den Fig. 1 und 2 beispielsweise ein gesinterter Magnet und/oder geschliffener Magnet usw. vorgesehen werden, beispielsweise aus Metall oder seltene Erden wie Neodym usw.. Das Magnetelement 5 in den Fig. 1 und 2 kann sowohl diametral magnetisiert oder radial magnetisiert sein. Die Erfindung ist jedoch weder auf gesinterte Magnete oder geschliffene Magnete noch auf gesinterte Magnete aus Metall beschränkt. Es kann jeder Magnet eingesetzt werden, welcher sich als Magnetelement für die elektrische Maschine 1 eignet.

In der Darstellung in Fig. 2 können zwischen den äußeren Enden 22 und 23 des ersten und zweiten Wellenteils 12, 13 und dem ersten und zweiten Laufrad 8, 9 zusätzlich die optionalen Zwischenscheiben z.B. aus Metall vorgesehen werden. Diese können beispielsweise eine gute Wärmeleitung aufweisen und optional zusätzlich in axialer Richtung federnd sein. Mittels der Zwischenscheiben können unterschiedliche Materialien für die Wellenteile 12, 13 und die gegenüberliegenden Laufräder 8, 9 und die damit verbundenen unterschiedlichen Materialeigenschaften ausgeglichen werden.

In den Ausführungsbeispielen in den Fig. 1 und 2 ist außen um die Hülse 16 mit ihrer Magnetelement-Aufnahme der Stator 2 mit seinen Statorwicklungen 3 angeordnet.

Wahlweise zusätzlich kann, wie in dem Ausführungsbeispiel in Fig. 2 mit einer gestrichelten Linie angedeutet ist, das elastisches Ausgleichselement 17 zwischen der Innenseite der Magnetelement-Aufnahme der Hülse 16 und der Außenseite des jeweiligen Magnetelementes 5 sowie gegebenenfalls der Außenseite wenigstens einer Trägerplatte 18 vorgesehen sein.

Das zuvor mit Bezug auf die Fig. 1 und 2 genannte elastische Ausgleichselement 17 ist beispielsweise wenigstens eine elastische Ausgleichs- oder Verbindungsschicht. Das Material des Ausgleichselements 17 bzw. der in Fig. 1 und 2 gezeigten Ausgleichs- oder Verbindungsschicht ist vorzugsweise elektrisch nicht leitend. Als Material für das Ausgleichselement kann beispielsweise ein Harz verwendet werden, wobei das Harz vorzugsweise in ausgehärtetem Zustand zumindest teilweise elastisch ist. Die Erfindung ist jedoch auf ein Harz als Material für das Ausgleichselement 17 nicht beschränkt. Es kann jedes andere Material oder jede andere Materialkombination vorgesehen werden, die geeignet ist die Magnetelemente 5 und das wenigstens ein Wellenteil der elektrischen Maschine 1 sowie gegebenenfalls die wenigstens eine Trägerplatte 18 zu verbinden.

Die Ausgleichs- oder Verbindungsschicht weist elastische und dämpfende Eigenschaften auf. Des Weiteren sorgt die Ausgleichs- oder Verbindungsschicht als eine mechanische Ausgleichs- oder Verbindungsschicht für einen gleichmäßigen Kräfteausgleich bzw. für eine gleichmäßige Verteilung der Vorspannkraft der Magnetelement-Aufnahme auf das jeweilige Magnetelement 5 in radialer Richtung, um die durch das jeweilige Magnetelement 5 erzeugte Fliehkraft beim Drehen der Welle 6 abzufangen. Die Ausgleichs- oder Verbindungsschicht kann bei der Montage beispielsweise in einem halbflüssigen Zustand auf der Innenseite der jeweiligen Magnetelement-Aufnahme und/oder der Außenseite der Magnetelemente 5 und gegebenenfalls der Außenseite einer vorhandenen Trägerplatte 18 aufgebracht und anschließend thermisch behandelt werden, um auszuhärten. Die Wiedererweichungstemperatur des Materials der Ausgleichs- oder Verbindungsschicht ist dabei ausreichend hoch und insbesondere ausreichend höher als die maximale Betriebstemperatur insbesondere der Magnetelemente 5 und des jeweiligen Wellenteils und seiner Magnetelement-Aufnahme, so dass die Ausgleichs- oder Verbindungsschicht im Betrieb der elektrischen Maschine 1 nicht ungewollt weich wird.

Das Vorsehen der Ausgleichs- oder Verbindungsschicht hat den Vorteil, dass sie auch einen Toleranzausgleich zwischen den hochtolerierten metallischen Elementen, hier insbesondere den Wellenteilen 12 und 13 und den Magnetelementen 5, sowie einer gegebenenfalls vorhandenen Trägerplatte 18 erlaubt, bei deren Fertigung entweder keine genauen Toleranzen möglich sind oder die Nachfolgeprozesse, wie z.B. Schleifen usw., sehr teuer oder unter Umständen sogar gesundheitsschädlich sind. Dies kann beispielsweise bei Magnetelementen 5 der Fall sein, welche auf Neodymium - Seltene-Erden basieren. Die Fliehkräfte der Magnetelemente 5 können durch das Ausgleichselement 17, z.B. die in Fig. 1 und 2 gezeigte Ausgleichs- oder Verbindungsschicht, in einem breiten Betriebsbereich der Drehzahl und der Temperatur neutralisiert bzw. geeignet kompensiert werden.

Des Weiteren kann wahlweise zusätzlich, wie zuvor beschrieben, eine Trägerplatte 18 zwischen dem jeweiligen inneren Enden 14, 15 des Wellenteils 12 bzw. 13 und dem gegenüberliegenden Ende des jeweiligen Magnetelements 5 vorgesehen werden. Die Trägerplatten 18 werden dabei auf die Verbindungsstange 20 aufgeschoben. Die Trägerplatten 18 an beiden Enden der Magnetelemente 5 dienen dabei als axiale Aufnahmen für die Magnetelemente 5. Wie zuvor beschrieben kann aber auch nur an einem Ende des jeweiligen Magnetelements 5 eine Trägerplatte oder gar keine Trägerplatte vorgesehen werden, je nach Funktion und Einsatzzweck.

In dem in Fig. 2 gezeigten Ausführungsbeispiel, ist wie zuvor beschrieben, die Magnetelement-Aufnahme der Hülse 16 als Nut 32 ausgebildet, so dass eine segmentierte Bauweise der Magnetelement-Anordnung sowie gegebenenfalls in der Nut 32 aufgenommenen Trägerplatte(n) 18 erforderlich ist. Im Falle einer solchen segmentierten Bauweise der Magnetelemente 5, bei welcher beispielsweise wenigstens zwei Magnetelemente 5 z.B. in Form von Magnetstäben, radial um einen Außenumfangsabschnitt der Verbindungsstange 20 angeordnet, wie in nachfolgenden Fig. 4a und 4b angedeutet ist, werden zunächst die einzelnen Magnetstäbe in die Magnetelement-Aufnahme der Hülse 16 eingeführt und in die Nut 32 eingesetzt. Die Magnetelemente 5 bilden dabei mit ihren Innenumfangsflächen eine Durchgangsöffnung, durch welche anschließend die Verbindungsstange 20 hindurchgeführt werden kann. Gleiches gilt für die Trägerplattensegmente, welche eine Trägerplatte 18 bilden. Diese werden zunächst in die Nut 32 eingesetzt und dabei radial um einen Außenumfangsabschnitt der Verbindungsstange 20 angeordnet. Die Trägerplattensegmente bilden ebenfalls mit ihrer Innenumfangsfläche eine Durchgangsöffnung durch welche die Verbindungsstange 20 später hindurchgeführt wird. Dabei können, die Magnetelemente 5 auf ihrer Außenumfangsfläche, die Nut 32 auf ihrer Innenumfangsfläche und/oder wenigstens eine Trägerplatte 18 auf ihrem Außenumfang wahlweise zusätzlich mit dem zuvor beschriebenen Ausgleichselement 17 versehen sein.

In einer alternativen Ausführungsform können auch nur die Magnetelemente 5 in der Nut 32 ohne die Trägerplatten 18 oder bei zwei Trägerplatten nur eine Trägerplatte 18 in der Nut 32 aufgenommen werden. In diesem Fall kann die Trägerplatte 18, welche nicht in der Nut 32 der Hülse 16 aufgenommen wird, stattdessen auch scheibenförmig ausgebildet sein und einen Außendurchmesser aufweisen, welcher an den Innendurchmesser der Hülse 16 angepasst ist, so dass die Trägerplatte 18 in die Hülse 16 eingeschoben und an dem zugeordneten Ende des jeweiligen Magnetelements 5 außerhalb der Nut 32 in der Hülse 16 positioniert werden kann, wie in dem Ausführungsbeispiel in Fig. 2 mit einer gepunkteten Linie angedeutet ist und bei den Trägerplatten 18 in Fig. 1 erfolgt..

Die gegebenenfalls vorhandene(n) axiale(n) Trägerplatte(n) 18 ist bzw. sind, wie in Fig. 1 gezeigt, an dem bzw. den Enden der Magnetelemente 5 derart angeordnet, dass durch das auf der Verbindungsstange 20 vorgesehene Spannelement 19 eine entsprechend in axialer Richtung generierte und geleitete mechanische Vorspannung bereitgestellt werden kann, welche die Aufnahme und radiale Positionierung der Magnetelemente 5 gewährleistet.

Die in erster Linie für die Halterung und Positionierung der Magnetelemente 5 konzipierte jeweilige axiale Trägerplatte 18 kann des Weiteren die folgende zusätzliche Funktion haben. Im Falle, dass die Trägerplatte 18 aus einem Material mit entsprechend ausgewählten magnetischen Eigenschaften ausgebildet wird, kann sie zusätzlich einen Teil des Streuflusses an dem jeweiligen Rand der Magnetelemente 5 abfangen. Dadurch gelangen die schnell rotierenden magnetischen Felder nicht in die nahe gelegenen stationären Konstruktionselemente der elektrischen Maschine 1. Hierdurch werden Zusatzverluste und die Erwärmung der elektrischen Maschine 1 reduziert. Die jeweilige Trägerplatte 18 kann dazu beispielsweise aus einem nicht magnetischen Material oder Materialkombination hergestellt werden, wie z.B. aus Stahl oder aus einem anderen nicht magnetischen Metall oder nicht magnetischen Metalllegierung.

Die Welle 6 ist mittels Radiallagern 24 gelagert, welche auf jeweils einem der Wellenteile 12, 13 angeordnet sind, wie in Fig. 1 und 2 gezeigt ist.

Des Weiteren ist an einem Wellenteil, in den Fig. 1 und 2 das zweite Wellenteil 13, ein Axiallager 25 vorgesehen. In den Fig. 1 und Fig. 2 ist dabei die Rotationsscheibe des Axiallagers 25 dargestellt. Das Axiallager 25 ist beispielsweise ein herkömmliches Gaslager, z.B. ein dynamisches Gaslager. Die Erfindung ist jedoch nicht auf ein herkömmliches Gaslager als Axiallager beschränkt. Grundsätzlich kann jedes Axiallager eingesetzt werden, welches zur Lagerung des Wellenteils der elektrischen Maschine 1 geeignet ist.

Die Laufrad 8 ist fest mit der Verbindungsstange 20 der elektrischen Maschine und dem Rotor 4 durch das Spannelement 19 verbunden.

Die Passung zwischen der Verbindungsstange 20 und dem ersten Wellenteil 12, durch welche die Verbindungsstange 20 in den Fig. 1 und 2 vollständig hindurchgeführt ist, kann derart gewählt werden, dass eine relative Verschiebung zwischen der Verbindungsstange 20 und dem Wellenteil 12 oder ein Schiebesitz des Wellenteils 12 auf der Verbindungsstange 20 vorzugsweise im gesamten Temperaturbereich oder Betriebstemperaturbereich möglich ist.

Die Konstruktion des Rotorsystems und seines Rotors 4 der elektrischen Maschine 1 hat den Vorteil, dass die strukturelle Festigkeit und Steifigkeit bei einer möglichst maximalen aktiven Masse der Magnetelemente 5 vergrößert und damit eine maximal erreichbare Energiedichte der Maschine 1 erzielt werden kann. Weiter kann die Steifigkeit durch die Einstellung der Zugkraft an der Verbindungsstange 20 eingestellt werden. Die Verbindungsstange 20 oder-stab arbeitet auf Zug. Dies hat einen großen Einfluss auf das Vergrößern der Steifigkeit bei einer nur sehr kleinen Zusatzmasse und einem vernachlässigbaren Zusatz-Trägheitsmoments des Rotors 4. Des Weiteren erfolgt keine wesentliche Reduzierung der aktiven Magnetmasse $Vm$, wobei für die Magnetmasse $Vm$ gilt:

$$V_m = \frac{\pi}{4}(Dm^2 - Dst^2) \cdot Lm$$

Wobei $Dst >> Dm$
$Dst$ : Magnetmasse
$Dst$ : Durchmesser der Verbindungsstange
$Dm$ : Magnetdurchmesser
$Lm$ : Magnetlänge

Die Verbindungsstange 20 weist beispielsweise eine zylindrische Form auf oder zumindest einen zylindrischen Abschnitt mit dem Durchmesser $Dst$. Gleiches gilt für die jeweilige Magnetelement-Aufnahme. Auch diese kann einen zylindrischen Querschnitt oder alternativ auch beispielsweise einen eckigen oder ovalen Querschnitt usw. aufweisen. Die Verbindungsstange 20 und die Magnetelement-Aufnahme des jeweiligen Wellenteils können jedoch jeden beliebigen Querschnitt aufweisen, je nach Funktion und Einsatzzweck.

In den Fig. 3a und 3b ist ein Beispiel für ein hülsenförmiges Magnetelement 5 gezeigt, wobei Fig. 3a eine Seitenansicht und Fig. 3b eine Querschnittansicht des hülsenförmigen Magnetelements 5 zeigt.

Das Magnetelement 5 kann z.B. als Zylinder wie in Fig. 3a gezeigt ist mit einem flachen Ende und einem kegelstumpfförmigen Ende als einem Beispiel für ein nach außen hervortretendes stumpfes Ende ausgebildet sein, oder wie in Fig. 3a mit einer gepunkteten Linie angedeutet ist, ein kegelförmiges Ende als ein Beispiel für ein nach außen hervortretendes spitzes Ende aufweisen. Die Erfindung ist jedoch auf die gezeigten Beispiele für nach außen hervortretende spitze und stumpfe Enden nicht beschränkt.

Des Weiteren kann das Magnetelement 5, wie in Fig. 3b durch Pfeile angedeutet, diametral oder radial magnetisiert sein. Wenigstens ein solches hülsenförmiges oder scheibenförmiges Magnetelement 5 kann in der Magnetelement-Aufnahme in Fig. 1 eingeführt oder eingeschoben werden. Im Falle von mehreren solchen Magnetelementen 5, können diese in axialer Richtung hintereinander in die Magnetelement-Aufnahme eingeführt werden.

In den Fig. 3a und 3b ist ein Beispiel für eine segmentierte Magnetelement-Anordnung aus beispielsweise zwei Magnetelementen 5 gezeigt, wobei Fig. 3a eine Seitenansicht und Fig. 3b eine Querschnittansicht der Magnetelemente 5 zeigt.

Die beiden Magnetelemente 5 können, wie in Fig. 3a gezeigt ist, jeweils ein flaches Ende und ein nach außen hervortretendes spitzes Ende aufweisen oder wie in Fig. 3a mit einer gepunkteten Linie angedeutet ist auch ein nach außen hervortretendes stumpfes Ende aufweisen zum Ausbilden eines gemeinsamen kegelstumpfförmigen oder kegelförmigen Endes der Magnetelemente. Die beiden Magnetelemente 5 können wie zuvor beschrieben in eine nutförmige Magnetelement-Aufnahme eines Wellenteils, wie in Fig. 2, eingesetzt werden, wobei sie mit ihrem Innenumfang eine Durchführung für die Verbindungsstange bilden, welche z.B. anschließend hindurchgeführt werden kann.

Des Weiteren können die Magnetelemente 5, wie in Fig. 4b durch Pfeile angedeutet, diametral oder radial magnetisiert sein. Wenigstens eines dieser Magnetelemente 5 kann in der Nut in dem Ausführungsbeispiel in Fig. 2, sowie auch in der Magnetelement-Aufnahme in den Fig. 1 eingesetzt werden.

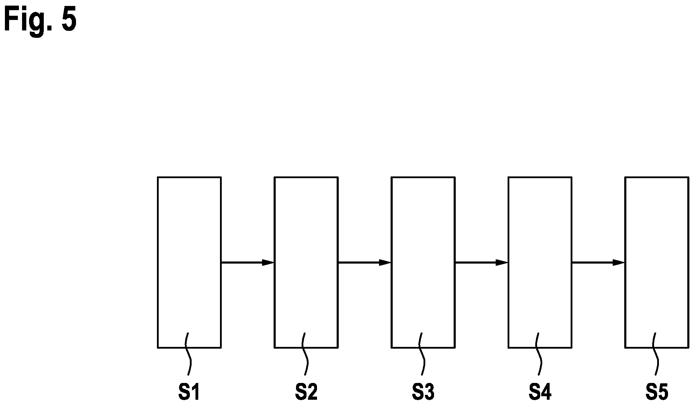

In Fig. 5 ist ein Flussdiagramm zur Herstellung des zuvor beispielhaft mit Bezug auf Fig. 1 und 2, sowie 3a, 3b, 4a und 4b beschriebenen erfindungsgemäßen Rotorsystems dargestellt.

Zur Herstellung des Rotors des erfindungsgemäßen Rotorsystems wird in einem ersten Schritt S1 eine Hülse mit einer Magnetelement-Aufnahme zur Aufnahme des jeweiligen Magnetelements bereitgestellt. Dabei kann die Magnetelement-Aufnahme an ihrem Innenumfang oder das wenigstens eine Magnetelement an seinem Außenumfang optional mit dem elastischen Ausgleichselement versehen werden, bevor das Magnetelement anschließend in die Magnetelement-Aufnahme der Hülse eingeführt wird.

In einem nächsten Schritt S2 wird das wenigstens eine Magnetelement in die Magnetelement-Aufnahme der Hülse eingeführt. Wahlweise zusätzlich kann dabei eine erste Trägerplatte in die Magnetelement-Aufnahme eingeführt werden, bevor anschließend das jeweilige Magnetelement in die Magnetelement-Aufnahme eingesetzt wird. Je nach Ausführung der Magnetelement-Aufnahme, z.B. in Form einer Nut, kann die Magnetelement-Anordnung und sofern vorhanden die Trägerplatte(n) segmentiert ausgebildet sein.

In einem weiteren Schritt S3 kann eine zweite Trägerplatte wahlweise zusätzlich an den äußeren Enden der Magnetanordnung angeordnet werden. Sofern eine erste Trägerplatte bereits in der Magnetelement-Aufnahme positioniert wurde, wird lediglich die zweite verbleibende Trägerplatte ebenfalls in der Magnetelement-Aufnahme oder daran anschließend in der Hülse angeordnet. Dabei kann zwischen der Innenseite der Magnetelement-Aufnahme der Hülse oder Innenseite der Hülse und der Außenseite der zweiten Trägerplatte wahlweise zusätzlich ebenfalls das elastische Ausgleichselement vorgesehen sein.

Das Aushärten des für das Ausgleichselement verwendete Harzes kann z.B. je nach verwendetem Harz vor und/oder nach dem Positionieren des wenigstens einen Magnetelements in der Magnetelement-Aufnahme, sowie vor und/oder nach dem Positionieren gegebenenfalls einer ersten oder zweiten Trägerplatte und/oder alternativ vor und/oder nach dem Durchführen der Verbindungsstange durch den Rotor erfolgen.

Die Verbindungsstange kann dabei z.B. im Anschluss an den Schritt S2 durch das Wellenteil und die durch das wenigstens eine Magnetelement gebildete Durchführung und, falls bereit eingesetzt, durch die Öffnung der ersten Trägerplatte hindurchgeführt und in das andere Wellenteil eingeführt und daran befestigt werden.

Ebenso kann erst im Anschluss an den Schritt S3 vor dem Schritt S4 die Verbindungsstange durch das Wellenteil, die Öffnung der ersten und zweiten Trägerplatte und die Durchführung des wenigstens einen Magnetelements hindurchgeführt und in das andere Wellenteil eingeführt und daran befestigt werden.

Des Weiteren kann die Verbindungsstange auch erst in dem Schritt S4 nach dem Verbinden der Hülse mit den beiden Wellenteilen durch die Wellenteile und den Rotor aus wenigstens einem Magnetelement und falls vorhanden wenigstens einer Trägerplatte hindurchgesteckt werden.

Ebenso kann auch die Verbindungsstange in einem Schritt zuerst in das eine Wellenteil eingeführt und an diesem befestigt werden und anschließend die Hülse mit dem wenigstens einen Magnetelement und gegebenenfalls wenigstens einen zusätzlichen Trägerplatte im Anschluss an den Schritt S3 oder S4 auf die Verbindungsstange aufgeschoben und die Hülse an den beiden Wellenteilen befestigt werden, z.B. durch Aufschrumpfen, Verpressen usw..

Die Verbindungstange erfährt hauptsächlich Zugkräfte, die man an dem freien Wellenende, entsprechend dem Schwingungsverhalten der Maschine einstellen kann.

Das Magnetelement, insbesondere das hülsenförmige oder scheibenförmige Magnetelement, kann radial oder diamaterial magnetisiert ausgebildet sein. Dies gilt für alle Ausführungsformen der Erfindung.

Zum Herstellen einer elektrischen Maschine, wie sie zuvor mit Bezug auf die Fig. 1 und 2 beschrieben wurde, mit dem erfindungsgemäßen Rotorsystem, werden in einem anschließenden zusätzlichen Schritt S5, nach dem Verbinden der Wellenteile und der Hülse in Schritt S4, das eine Laufrad auf der Verbindungsstange angeordnet und schließlich das Laufrad und die zwischen dem Laufrad und dem zweiten Wellenteil angeordneten Elemente durch das Spannelement gegeneinander in axialer Richtung verspannt.

Die radiale und axiale Lagerung der Welle mittels wenigstens zwei Radiallagern und wenigstens einem Axiallager können in einem geeigneten der zuvor beschriebenen Schritte vorgesehen werden.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. Insbesondere können die zuvor anhand der Figuren 1, 2, 3a, 3b, 4a, 4b und 5 beschriebenen Ausführungsbeispiele auch miteinander kombiniert werden, insbesondere einzelne Merkmale davon.

**Patentansprüche**

1. Rotorsystem für eine elektrische Maschine (1) aufweisend:

   eine zweigeteilte Welle (6) mit einem ersten Wellenteil (12) und einem zweiten Wellenteil (13),
   eine Verbindungsstange (20), welche die beiden Wellenteile (12, 13) miteinander verbindet und welche durch das eine Wellenteil (12) hindurchgeführt und mit dem anderen Wellenteil (13) fest verbunden ist, wobei zwischen beiden Wellenteilen (12, 13) ein Rotor (4) mit wenigstens einem Magnetelement (5) angeordnet ist.

2. Rotorsystem nach Anspruch 1, **dadurch gekennzeichnet, dass** die Verbindungsstange (20) in einer Verbindungsstangenaufnahme des Wellenteils (13) aufgenommen ist, wobei die Verbindungsstange (20) mit der Verbindungsstangenaufnahme kraftschlüssige und/oder formschlüssige verbunden ist, und/oder
   wobei die Verbindungsstange (20) insbesondere lösbar in der Verbindungsstangenaufnahme befestigt ist, insbesondere durch Verstiften (19), Verschrauben, und/oder Verbolzen, und/oder
   wobei die Verbindungsstange (20) unlösbar in der Verbindungsstangenaufnahme befestigt ist, insbesondere durch Verkleben, Verschweißen und/oder Verlöten.

3. Rotorsystem nach Anspruch 1, **dadurch gekennzeichnet, dass** die Verbindungsstange (20) und das Wellenteil (13) einstückig hergestellt sind, insbesondere aus Metall, Kunststoff und/oder einem Faserverbundmaterial, insbesondere einem Kohlefaserverbundmaterial.

4. Rotorsystem nach einem der vorstehenden Ansprüche, **dadurch gekennzeichnet, dass** zumindest die Verbindungsstange (20) aus einem Material mit einer möglichst großen mechanischen Stabilität und einem möglichst niedrigen thermischen Ausdehnungskoeffizienten hergestellt ist, insbesondere aus einem Faserverbundmaterial wie Kohlefaserverbundmaterial.

5. Rotorsystem nach einem der vorstehenden Ansprüche, **dadurch gekennzeichnet, dass** eine Hülse (16) zum Verbinden der beiden inneren Enden (14, 15) der Wellenteile (12, 13) vorgesehen ist, wobei die Hülse (16) vorzugsweise durch Verpressen oder Aufschrumpfen mit wenigstens einem der Wellenteile (12, 13) verbunden ist.

6. Rotorsystem nach Anspruch 5, **dadurch gekennzeichnet, dass** die Hülse (16) eine Magnetelement-Aufnahme (36) zum Aufnehmen des wenigstens einen Magnetelements (5) aufweist und mit dem wenigstens einen Magnetelement (5) den Rotor (4) bildet, wobei die Verbindungsstange (20) entlang einer Durchführung des wenigstens einen Magnetelements (5) hindurchgeführt ist, wobei die Durchführung des Magnetelements (5) insbesondere eine Durchgangsöffnung oder eine Innenseite eines Magnetelementsegments ist, welche eine Durchführung für die Verbindungsstange (20) durch die Hülse (16) bildet und, wobei das Magnetelementsegment dabei um die Verbindungsstange (20) angeordnet ist.

7. Rotorsystem nach Anspruch 5 oder 6, **dadurch gekennzeichnet, dass** der Innenumfang der Hülse (16) die Magnetelement-Aufnahme (36) bildet und einen konstanten Innendurchmesser aufweist, und/oder die Hülse (16) an ihrem Innenumfang eine umlaufende Nut (32) als Magnetelement-Aufnahme (36) aufweist und/oder die Hülse (16) an ihrem Innenumfang derart abgestuft ausgebildet ist, dass das wenigstens eine Magnetelement (5), insbesondere eine Magnetelementhülse, von wenigstens einer Seite in die Magnetelement-Aufnahme (36) bis zu der Abstufung einschiebbar ist.

8. Rotorsystem nach Anspruch 6 oder 7, **dadurch gekennzeichnet, dass** in der Magnetelement-Aufnahme (36) an wenigstens einem Ende des wenigstens einen Magnetelements (5) eine zusätzliche Trägerplatte (18) anordenbar ist, wobei die Trägerplatte (18) zusätzlich segmentiert ausgebildet sein kann zum Einsetzen in die Nut (32) als Magnetelement-Aufnahme (36).

9. Rotorsystem nach einem der vorstehenden Ansprüche, **dadurch gekennzeichnet, dass** das wenigstens eine Magnetelement (5) als ein Magnetsegment ein Magnetstab, oder alternativ eine Magnetscheibe oder eine Magnethülse ist und das wenigstens eine Magnetelement (5) insbesondere radial oder diametral magnetisiert ausgebildet ist.

10. Rotorsystem nach einem der vorstehenden Ansprüche, **dadurch gekennzeichnet, dass** wenigstens ein Ende des wenigstens einen Magnetelements (5) als flaches Ende oder als ein nach außen hervorstehendes spitzes oder stumpfes Ende ausgebildet ist und wobei mehrere Magnetelemente (5) wenigstens ein gemeinsames flaches Ende oder ein gemeinsames nach außen hervorstehendes spitzes oder stumpfes Ende, insbesondere konisches Ende, ausbilden.

11. Rotorsystem nach einem der vorstehenden Ansprüche, **dadurch gekennzeichnet, dass** an der Innenumfangsfläche der Magnetelement-Aufnahme (36) und/oder an der Außenumfangsfläche des wenigstens einen Magnetelements (5) ein elastisches Ausgleichselement (17) vorgesehen ist und/oder zwischen dem Wellenteil (12, 13) und dem gegenüberliegenden Ende des wenigstens einen Magnetelements (5) ein elastisches Ausgleichselement (17) vorgesehen ist, wobei das Ausgleichselement (17) vorzugsweise eine Ausgleichsschicht ist, welche insbesondere aus einem Harz besteht, welches nach dem Aushärten zumindest teilweise elastisch ist.

12. Rotorsystem nach einem der vorstehenden Ansprüche, **dadurch gekennzeichnet, dass** zwischen wenigstens einem Ende des wenigstens einen Magnetelementes (5) und dem dazu gegenüberliegenden Wellenteil (12, 13) eine Trägerplatte (18) vorgesehen ist, wobei die Trägerplatte (18) eine axiale Aufnahme für das wenigstens eine Magnetelement (5) bildet und wobei vorzugsweise ein zusätzliches elastisches Ausgleichselement (17) zwischen dem Ende des wenigstens einen Magnetelements und der Trägerplatte (18) und/oder zwischen der Trägerplatte (18) und dem gegenüberliegenden Wellenteil (12, 13) vorgesehen ist.

13. Rotorsystem nach einem der Ansprüche 8 bis 12, **dadurch gekennzeichnet, dass** die wenigstens eine Trägerplatte (18) aus einem nicht magnetischen Material oder einer nicht magnetischen Materialkombination hergestellt ist.

14. Elektrische Maschine (1) mit einem Rotorsystem gemäß einem der vorstehenden Ansprüche, wobei die elektrische Maschine (1) insbesondere eine Hochgeschwindigkeitsmaschine, vorzugsweise eine Turbine und/oder ein Kompressor ist.

15. Verfahren zur Herstellung eines Rotorsystems (4) für eine elektrische Maschine (1) gemäß einem der Ansprüche 1 bis 13, wobei das Verfahren die Schritte aufweist:

    Bereitstellen einer Verbindungsstange (20), Bereitstellen einer Hülse (16) mit einer Magnetelement-Aufnahme (36); Bereitstellen wenigstens eines Magnetelements (5);

Bereitstellen einer zweiteiligen Welle (6) mit einem ersten Wellenteil (12) und einem zweiten Wellenteil (13), wobei das eine Wellenteil (12) eine Durchführung zum Hindurchführen der Verbindungsstange (20) aufweist,

Anordnen des wenigstens einen Magnetelements (5) in der Magnetelement-Aufnahme (36) und Verbinden der Hülse (16) mit den beiden gegenüberliegenden Enden (14, 15) der Wellenteile (12, 13), wobei die Verbindungsstange (20) durch die Durchführung des einen Wellenteils (12) hindurchgeführt und in an dem anderen Wellenteil (13) befestigt ist.

Fig. 1

Fig. 2

**Fig. 3a**

**Fig. 3b**

# Fig. 4a

# Fig. 4b

# Fig. 5

S1 → S2 → S3 → S4 → S5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4433261 A